# EUROPÄISCHE PATENTSCHRIFT

(11) **EP 4 409 151 B1**
(45) Veröffentlichungstag und Bekanntmachung des Hinweises auf die Patenterteilung: **10.09.2025**
(21) Anmeldenummer: 22782530.4
(22) Anmeldetag: 22.09.2022
(51) Int. Cl.: F16C 41/02, F16C 29/12, F16C 29/02

(54) **GLEITLAGERFÜHRUNG, INSBESONDERE LINEARFÜHRUNG, MIT VORGESPANNTEM GLEITELEMENT SOWIE SCHLITTEN HIERFÜR**
SLIDING BEARING GUIDE, IN PARTICULAR LINEAR GUIDE, WITH A PRETENSIONED SLIDING ELEMENT, AND CARRIAGE FOR SAME
GUIDE DE PALIER LISSE, EN PARTICULIER GUIDE LINÉAIRE, DOTÉ D'UN ÉLÉMENT DE GLISSEMENT PRÉCONTRAINT, ET CHARIOT À CET EFFET

(30) Priorität: 01.10.2021 DE 202021105330 U
(43) Veröffentlichungstag der Anmeldung: 07.08.2024
(73) Patentinhaber: igus GmbH, 51147 Köln (DE)
(72) Erfinder: TÜRKER, Muhammet Erkam, 52388 Nörvenich (DE)
(74) Vertreter: Lippert Stachow Patentanwälte Rechtsanwälte
(86) Internationale Anmeldenummer: PCT/EP2022/076417
(87) Internationale Veröffentlichungsnummer: WO 2023/052242

(56) Entgegenhaltungen:
- CH-A5- 663 373
- DE-A1- 2 718 362
- JP-A- 2003 314 545
- JP-B2- 3 740 708
- US-A1- 2006 083 447
- US-B2- 10 584 746

## Beschreibung

Die Erfindung betrifft eine Gleitlagerführung, insbesondere eine Linearführung, einen Schlitten für die solche Gleitlagerführung bzw. Linearführung sowie eine Verwendung der Linearführung, insbesondere zur schmierfreien Lagerung unter Verzicht auf Schmiermittel (Trockenlauf).

Gattungsgemäße Führungen sind bekannt. Beispielsweise werden sie eingesetzt zur gleitenden linearen Führung in Arbeitsgeräten, Fertigungsanlagen, Messgeräten oder dergleichen. Dabei sind im Stand der Technik sowohl Linearführungen zur Führung entlang einer geraden Führungsstrecke, als auch Ausführungsformen zur Führung entlang einer kurvigen Führungsstrecke bekannt, welche vorliegend ebenfalls als (kurvilineare) Linearführungen betrachtet werden. Grundsätzlich existieren Linearführungen in verschiedensten Baugrößen, wobei je nach Baugröße unterschiedliche konstruktive Beschränkungen gelten.

Derartige Linearführungen umfassen üblicherweise einen Schlitten, der auf einer Schiene der Linearführung gleitend gelagert und über eine lang gestreckte Erstreckung der Schiene hinweg relativ zur Schiene in einer Längsrichtung, z.B. entlang einer Geraden oder einer Kurve, gleitend hin und her verschiebbar ist. Dabei gleiten Gleitflächen des Schlittens an Führungsflächen der Schiene ab, vorzugsweise schmiermittelfrei, d.h. ohne zwischen den aneinander abgleitenden Flächen vorgesehenem Schmiermittel. Für die aneinander abgleitenden Flächen werden üblicherweise Materialpaarungen verwendet, die sich durch einen besonders geringen Reibwert, auszeichnen, beispielsweise Kunststoff-Kunststoff oder Kunststoff-Metall Materialpaarungen.

Beispielsweise kann die Schiene aus Metall als langgestrecktes Profil mit einer im Wesentlichen konstanten Querschnittsgeometrie hergestellt sein, beispielsweise U-förmig, W-förmig, T-förmig oder dergleichen. Der Schlitten umfasst üblicherweise einen Schlittenkörper, der meist quaderförmig und häufig aus Metall gefertigt ist und Befestigungsmittel zur Befestigung des Schlittens an einem zu führenden Körper aufweisen kann. Gleichermaßen kann die Schiene Befestigungsmittel zur Befestigung an einem Körper, relativ zu dem der vorgenannte Körper geführt werden soll, aufweisen.

Zur Realisierung einer Kunststoff-Metall Materialpaarung ist es beispielsweise bekannt, zumindest Teile die Schiene aus Metall und an den Teilen gleitend anliegende Gleitlager-Abschnitte des Schlittens aus Kunststoff auszubilden.

Bei gattungsgemäßen Gleitlagerführungen bzw. Linearführungen kann daher nicht vollständig vermieden werden, dass mit fortdauernder Benutzung der Linearführung aneinander abgleitende Abschnitte von Schlitten und Schiene verschleißen, was zu einem unerwünschten Spiel in der Linearführung führt. Im Stand der Technik wird auf verschiedene Art versucht, verschleißbedingtes Spiel auszugleichen. Beispielsweise ist bekannt, verschleißbehaftete Abschnitte als separat ausgebildete Gleitelemente auszuführen, die bei Überschreiten einer Verschleißgrenze ausgetauscht werden, was mit häufigen Wartungsintervallen einhergeht. Andere Lösungen sehen beispielsweise vor, in dem Schlitten verstellbare Gleitelemente anzuordnen, die mittels einer Mechanik, z.B. eines daran gekoppelten Getriebes manuell oder selbsttätig verstellbar sind. Derartige Lösungen weisen jedoch einen komplexen Aufbau mit einer Vielzahl an Bauteilen auf, die ihrerseits wiederum verschleißbehaftet sind. Ferner bauen derartig ausgeführte Linearführungen für manche Anwendungen zu groß bzw. sind nicht hinreichend kompakt.

Derartige Lösungen eignen sich insbesondere nicht für miniaturisierte Linearführungen, beispielsweise, wenn eine maximale Erstreckung des Schlittens quer zur Längsrichtung max. 80 mm, insbesondere max. 60 mm betragen soll. In CH 663 373 A5, JP 3 740 708 B2, JP 2003 314545 A, DE 2 718 362 A1, US 10 584 746 B2 und US 2006 083 447 A1 sind verschiedene Gleitlagerführungen bekannt, bei denen eine durch eine Federeinrichtung realisierte Vorspannung zwischen Schiene und Schlitten gewährleistet ist.

Eine Aufgabe der vorliegenden Erfindung ist es, eine Gleitlagerführung bereitzustellen, die zumindest einen der vorgenannten Nachteile zumindest teilweise behebt. Die Gleitlagerführung soll insbesondere bei kompakter Bauform eine selbsttätige Spielreduzierung ermöglichen. Zur Lösung der Aufgabe schlägt die Erfindung eine Gleitlagerführung, insbesondere Linearführung, mit den Merkmalen gemäß Anspruch 1 vor.

Die erfindungsgemäße Gleitlagerführung umfasst als wesentliche Bauteile eine Schiene und einen Schlitten und ist dabei insbesondere entsprechend den Merkmalen des Oberbegriffs aus Anspruch 1 ausgeführt.

Erfindungsgemäß wird zur Lösung der o.g. Aufgabe vorgeschlagen, dass zumindest ein Gleitelement einen entsprechenden Führungsabschnitt der Schiene an einer Seite, insbesondere Transversalseite, zumindest teilweise umgreift, und dass der Schlitten eine Federeinrichtung zum Spielausgleich umfasst, die das umgreifende Gleitelement als Ganzes bzw. insgesamt relativ zum zweiten Gleitlager-Abschnitt entlang einer Stellrichtung quer zur Längsrichtung, insbesondere transversalseitig, gegen den entsprechenden Führungsabschnitt der Schiene drückt.

Durch die Kombination einer umgreifenden Bauweise des Gleitelements mit einer einfach gestalteten Federeinrichtung, wird eine besonders kompakte Bauform des Schlittens mit selbsttätiger Spielreduzierung ermöglicht.

Die Federeinrichtung greift dabei zur Vereinfachung der Bauweise vorzugsweise unmittelbar am Gleitelement an, d.h. ohne zwischenliegende weitere Bauteile.

Die Federeinrichtung und kann insbesondere im Wesentlichen aus nur einem oder wenigen federnd wirkenden Federelementen bestehen.

Die Schiene weist einen in einer Längsrichtung langgestreckten, insbesondere linearen oder kurvilinearen, Schienenkörper auf. An beiden Transversalseiten des Schienenkörpers, d.h. Seiten der Schiene in einer Transversalrichtung senkrecht zur Längsrichtung betrachtet, ist jeweils ein sich entlang der Längsrichtung erstreckender Führungsabschnitt, d.h. ein erster und ein zweiter Führungsabschnitt, insbesondere integral mit dem Schienenkörper, ausgebildet.

Die Schiene kann insbesondere eine T-Schiene, vorzugsweise mit kompaktem Profilquerschnitt sein.

Besonders bevorzugt sind beide Führungsabschnitte jeweils an einer gleichen Vertikalseite des Schienenkörpers ausgebildet, wobei bevorzugt die Vertikalseite einer Befestigungsseite der Schiene gegenüberliegt, an der die Schiene vorzugsweise mit externen Komponenten verbindbar ist. Besonders bevorzugt erstrecken sich beide Führungsabschnitte über zumindest 80 %, insbesondere zumindest 95 %, einer Erstreckung der Schiene in Längsrichtung hinweg.

Der Schlitten kann als Gehäuseschlitten für zwei Gleitelemente bzw. zur Doppel-Gleitlagerung ausgeführt sein.

Der Schlitten weist vorzugsweise einen Schlittenkörper auf, an dem ein erster Gleitlager-Abschnitt und ein zweiter Gleitlager-Abschnitt vorgesehen sind. Der erste Gleitlager-Abschnitt liegt an einem ersten der Führungsabschnitte an und der zweite Gleitlager-Abschnitt liegt an einen zweiten der Führungsabschnitte an

Bevorzugt sind die Gleitlager-Abschnitte bestimmungsgemäß unter Beibehaltung ihrer Anlage an den Führungsabschnitten relativ zu den Führungsabschnitten, gleitend geführt bzw. gelagert und entsprechend verschieblich geführt. In einer Ausführungsform sind die Gleitlager-Abschnitte und der Schlittenkörper integral ausgebildet. In einer anderen Ausführungsform sind der Schlittenkörper und zumindest einer, insbesondere beide, der Gleitlager-Abschnitte separat ausgebildet, wobei insbesondere der Schlittenkörper aus einem anderen Material hergestellt ist als die Gleitlager-Abschnitte. Der Schlitten ist mittels seiner Gleitlager-Abschnitte gleitverschieblich an den Führungsabschnitten relativ zur Schiene in Längsrichtung geführt.

Bevorzugt ist der Schlitten ausschließlich über seine Gleitlager-Abschnitte, die an den Führungsabschnitten der Schiene anliegen, mit der Schiene verbunden.

Jeweils einer der Gleitlager-Abschnitte umgreift jeweils einen der Führungsabschnitte an der jeweiligen Transversalseite zumindest teilweise zum, bevorzugt unter Vernachlässigung von Spiel vollkommen unbeweglichen, Halten des Schlittens an der Schiene in zumindest einer Richtung senkrecht zur Längsrichtung. Vorzugsweise umgreift der erste Gleitlager-Abschnitt den ersten Führungsabschnitt und der zweite Gleitlager-Abschnitt den zweiten Führungsabschnitt umgreift.

Erfindungsgemäß umfasst zumindest der erste Gleitlager-Abschnitt ein separates Gleitelement. Bevorzugt liegt der erste Gleitlager-Abschnitt, insbesondere ausschließlich, mit dem Gleitelement an dem jeweiligen Führungsabschnitt an.

Die Federeinrichtung, die das Gleitelement relativ zum zweiten Gleitlager-Abschnitt entlang einer Stellrichtung, die quer zur Längsrichtung verläuft, insbesondere parallel zur Transversalrichtung, gegen den ersten Führungsabschnitt drückt bzw. presst bewirkt den Spielausgleich.

Mittels der Federeinrichtung sind bevorzugt die Gleitlager-Abschnitte in Stellrichtung relativ zueinander bzw. gegen die Führungsabschnitte vorgespannt. Dies erfolgt insbesondere unter Ausbildung eines geschlossenen Kraftflusses quer zur Längsrichtung, der zumindest durch Schlittenkörper, Federeinrichtung, Gleitelement, ersten Führungsabschnitt, Schienenkörper, zweiten Führungsabschnitt und zweiten Gleitlager-Abschnitt verläuft, insbesondere in der genannten Reihenfolge.

Allgemein bevorzugt ist das Gleitelement lösbar im Schlittenkörper aufgenommen, wobei das Gleitelement ausgebildet ist, eine Querschnittsänderung der Schiene entlang der Stellrichtung durch Verschieben des Gleitelements in Stellrichtung relativ zum zweiten Gleitlager-Abschnitt auszugleichen

Die vorzugsweise passive Federeinrichtung kann durch Andrücken, Pressen bzw. Vorspannen des Gleitelements gegen den ersten Führungsabschnitt eine weitgehend durchgehende Anlage des Gleitelements an den ersten Führungsabschnitt bewirken.

Besonders bevorzugt ist bewirkt die Federeinrichtung bei Verschieben des Gleitelements in einer von der Schiene weg weisenden Richtung eine Erhöhung der Andrück- bzw. Presskraft entlang der Stellrichtung. Besonders bevorzugt ist die Gleitlagerführung bzw. Linearführung mit einem plattenartigen Schlitten ausgebildet, der bestimmt ist überwiegend in einer Lastrichtung durch eine externe Kraft belastet zu werden, die im Wesentlichen senkrecht zur Stellrichtung und insbesondere im Wesentlichen senkrecht zur Längsrichtung verläuft.

Vorzugsweise umgreift jeweils einer der Gleitlager-Abschnitte den jeweiligen Führungsabschnitt dergestalt, dass der jeweilige Gleitlager-Abschnitt den jeweiligen Führungsabschnitt zu beiden Seiten einer Gleitfläche des jeweiligen Gleitlager-Abschnitts, die in Stellrichtung gegen den jeweiligen Führungsabschnitt gepresst ist, senkrecht zur Stellrichtung hintergreift. Entsprechendes gilt für das bzw. die Gleitelemente als solche. Erfindungsgemäß ist es vorgesehen, dass zumindest der erste Gleitlager-Abschnitt ein Gleitelement umfasst, wobei das federbelastete Gleitelement in Stellrichtung gegen den ersten Führungsabschnitt der Schiene gepresst ist und den ersten Führungsabschnitt in einer senkrecht zur Stellrichtung verlaufenden Richtung beidseitig hintergreift.

Die erfindungsgemäße Gleitlagerführung bzw. Linearführung ist wegen ihres einfachen Aufbaus besonders robust ausgebildet und kann ohne weiteres stark miniaturisiert ausgeführt sein. Es wurde u.a. festgestellt, dass es bereits ausreicht, wenn die Kraft, mit der das Gleitelement mittels der Federeinrichtung gegen den ersten Führungsabschnitt angedrückt wird, sehr gering ist, insbesondere kleiner 20N, vorzugsweise kleiner 15N, besonders bevorzugt ≤ 10N, und/oder zumindest jedoch 2N beträgt, um einen effektiven Spielausgleich zu gewährleisten.

Gemäß einer bevorzugten Ausführungsform genügt es, dass ausschließlich entlang einer einzigen der Stellrichtung entsprechenden Raumrichtung ein Spielausgleich vorgesehen ist, denn in vielen Anwendungsfällen führt überwiegend Spiel senkrecht zur Lastrichtung zu unpräzisen Führungseigenschaften.

Gemäß einer vorteilhaften Ausführungsform umfasst die Federeinrichtung ein federelastisch ausgelenktes Federelement. In einer bevorzugten Ausführungsform ist das Federelement als Schraubendruckfeder bzw. Spiralfeder, insbesondere aus geeignetem Metall, ausgebildet. In einer anderen Ausführungsform kann das Federelement z.B. als gummielastisches Kunststoffbauteil ausgebildet sein.

Die Federeinrichtung drückt bzw. presst das Gleitelement selbsttätig mit geeigneter Vorspannung bzw. Presskraft gegen den Führungsabschnitt, wobei in der vorteilhaften Ausführungsform die Kraft von einer Auslenkung des Federelements abhängt. Bevorzugt weist das Federelement eine zur Auslenkung proportionale Federkraft auf, die insbesondere in Stellrichtung wirkt. Besonders bevorzugt ist das Federelement in jeder Position des Schlittens ausgelenkt, wobei in jeder der Positionen das Gleitelement durch die Federeinrichtung gegen den ersten Führungsabschnitt gedrückt bzw. gepresst ist. Besonders bevorzugt ist das Federelement in dem Schlittenkörper angeordnet, was eine kompakte Bauweise ermöglicht.

In einer Ausführungsform umfasst der Schlitten ein Fixierelement, dass das Federelement in zumindest einer Richtung senkrecht zur Stellrichtung und insbesondere senkrecht zur Längsrichtung an dem Schlittenkörper fixiert. In einer bevorzugten Ausführungsform ist das Fixierelement als Schraube ausgebildet, die von einer Außenseite des Schlittenkörpers aus in den Schlittenkörper eingeschraubt und mit dem Federelement verbunden ist, wodurch das Federelement insbesondere formschlüssig an dem Schlittenkörper fixiert ist. In einer vorzugsweisen Ausführungsform ist zumindest ein Abschnitt des Fixierelements dergestalt, insbesondere entlang der Stellrichtung, überlappend mit dem Federelement angeordnet, dass der Abschnitt, insbesondere als ein Federdorn, mit dem Federelement zur Federführung zusammenwirkt. Besonders bevorzugt umfasst der Schlittenkörper eine Zugangsöffnung, durch die hindurch das Federelement in einer Richtung senkrecht zur Stellrichtung eingeführt an seine bestimmungsgemäße Position in dem Schlittenkörper angeordnet und durch das Fixierelement fixiert ist. Besonders bevorzugt liegt das Federelement unmittelbar an dem Schlittenkörper und/oder an dem ersten Gleitelement an. Vorzugsweise wirkt die von der Auslenkung des Federelements abhängige Kraft unmittelbar auf Schlittenkörper und/oder Gleitelement.

Besonders bevorzugt umfasst der Schlitten eine Verstellführung, die das Gleitelement relativ zum Schlittenkörper über einen Verstellweg hinweg entlang der Stellrichtung verschieblich führt. Besonders bevorzugt bildet dazu der Schlittenkörper einem ersten Teil der Verstellführung aus, der mit einem durch das Gleitelement ausgebildeten zweiten Teil der Verstellführung formschlüssig zusammenwirkt, insbesondere nach Art einer Nut-Feder-Verbindung. Besonders bevorzugt ist durch die Verstellführung entlang des Verstellwegs ein Verschieben des Gleitelements in Längsrichtung verhindert. Vorzugsweise ist das Gleitelement in der Verstellführung dergestalt relativ zum Schlittenkörper geführt, dass es ausschließlich in Verstellrichtung verschiebbar ist.

Allgemein ist mit einer Verschiebbarkeit eine beidseitige Verschiebbarkeit, d. h. eine Eignung zum hin und her Verschieben gemeint. Vorzugsweise weist die Verstellführung zumindest einen Anschlag auf, der den Verstellweg begrenzt. Besonders bevorzugt weist die Verstellführung zwei Anschläge auf, die den Verstellweg zu beiden Seiten begrenzen. Der Anschlag ist, insbesondere die Anschläge sind, ausgebildet, in unmittelbarer Anlage an dem Gleitelement ein Verschieben des Gleitelements in Stellrichtung über den Verstellweg hinaus zu verhindern. Insbesondere ist durch die Verstellführung ein Verkippen des Gleitelements senkrecht zur Stellrichtung verhindert.

Gemäß einer bevorzugten Ausführungsform greift die Federeinrichtung in Längsrichtung auf Höhe der Verstellführung an das Gleitelement an. Das heißt bevorzugt, dass die Kraft von der Federeinrichtung in Verstellrichtung auf Höhe der Verstellführung auf das Gleitelement übertragbar ist. Besonders bevorzugt greift die Federeinrichtung in einen Mittenbereich des Schlittens und/oder des Gleitelements an das Gleitelement an, wobei mit dem Mittenbereich ein Bereich gemeint ist, der von beiden absoluten Erstreckungsenden der den Bereich aufweisenden Komponente in Längsrichtung um zumindest 20 %, insbesondere um zumindest 30 %, einer maximalen Erstreckung der jeweiligen Komponente in Längsrichtung beabstandet ist. Dadurch kann das Gleitelement verkippungs- bzw. verkantungsfrei an den ersten Führungsabschnitt angedrückt bzw. angepresst sein.

Gemäß einer allgemein bevorzugten Ausführungsform umfasst der zweite Gleitlager-Abschnitt ein weiteres Gleitelement.

Die Gleitelemente sind bevorzugt einteilige, baugleiche Kunststoffbauteile.

Bevorzugt umgreift jeweils eines der Gleitelemente jeweils einen der Führungsabschnitte an der jeweiligen Transversalseite zumindest teilweise. Besonders bevorzugt ist das weitere Gleitelement unbeweglich an dem Schlittenkörper gehalten. Allgemein bevorzugt besteht der erste Gleitlager-Abschnitt aus dem Gleitelement und/oder der zweite Gleitlager-Abschnitt aus dem weiteren Gleitelement. Durch das Vorsehen der Gleitelemente kann der Schlittenkörper zugunsten einer guten Tragfähigkeit und die Gleitelemente zugunsten einer guten Gleitfähigkeit ausgelegt sein.

Gemäß einer bevorzugten Ausführungsform zumindest drei Gleitflächen auf, wobei jeweils zumindest zwei der Gleitflächen eines der Gleitlager-Abschnitte an jeweils unterschiedlichen Seiten, d. h. Seiten senkrecht zur Längsrichtung , eines der Führungsabschnitte gleitend anliegen. Die Gleitflächen jeweils eines der Gleitlager-Abschnitte sind insbesondere dadurch unterschiedlich, dass sie in jeweils unterschiedliche Richtungen weisen, wobei bevorzugt mehrere Gleitflächen eines der Gleitlager-Abschnitte unterbrechungsfrei ineinander übergehen können. Insbesondere ist zumindest eine, insbesondere sind zumindest zwei, insbesondere sind zumindest drei, der Gleitflächen des ersten Gleitlager-Abschnitts durch das Gleitelement ausgebildet. Bevorzugt ist zumindest eine, insbesondere sind zumindest zwei, insbesondere sind zumindest drei, der Gleitflächen des zweiten Gleitlager-Abschnitts durch das weitere Gleitelement ausgebildet. Bevorzugt ist die in Stellrichtung zur Transversalseite weisende Gleitfläche des ersten Gleitlager-Abschnitts durch das Gleitelement ausgebildet. Die Gleitflächen der Gleitlager-Abschnitte sind insbesondere dergestalt zueinander angeordnet, dass zumindest zwei der Gleitflächen zueinander weisen und/oder zumindest zwei Gleitflächen eines der Gleitlager-Abschnitte im Wesentlichen parallel gegenüberliegend verlaufen. Besonders bevorzugt ist zumindest eine der Gleitflächen in ihrer Erstreckung in Längsrichtung durch einen Mittenbereich unterbrochen, wobei der Mittenbereich bevorzugt eine von der Schiene beabstandete Freifläche aufweist, die gegenüber der angrenzenden Freifläche zurückversetzt ist. Dadurch ist für die gleitende Anlage von Führungsabschnitt und Gleitlager-Abschnitt eine definierte Mindestführungslänge, insbesondere von jeweils zumindest 10 mm, vorgegeben, wodurch ein Verkanten verhindert ist. Bevorzugt liegen immer zumindest zwei der Gleitflächen eines Gleitlager-Abschnitts an den korrespondierenden der Führungsabschnitte an, von denen zumindest eine der Gleitflächen in Stellrichtung weist.

Gemäß einer bevorzugten Ausführungsform, in der der zweite Gleitlager-Abschnitt das weitere Gleitelement umfasst, sind bevorzugt zumindest eine, insbesondere zumindest zwei, insbesondere zumindest drei der Gleitflächen des zweiten Gleitlager-Abschnitts durch das weitere Gleitelement ausgebildet. Bevorzugt weisen die durch die Gleitelemente ausgebildeten Gleitflächen entlang der Stellrichtung zueinander.

Besonders bevorzugt sind die Gleitelemente gleichartig bzw. baugleich ausgebildet, wobei die Gleitelemente jeweils eine Außenkontur aufweisen, die, insbesondere entlang der Längsrichtung , zumindest abschnittsweise im Wesentlichen zylindrisch, insbesondere kreiszylindrisch, ausgebildet ist, insbesondere über zumindest 60 %, insbesondere zumindest 70 %, insbesondere zumindest 80 %, einer Erstreckung des Gleitelements in Längsrichtung hinweg.

Gemäß einer bevorzugten Ausführungsform weist der Schlittenkörper zumindest einen Aufnahmebereich auf, der einen zumindest Abschnitten der Außenkontur des Gleitelements nachgebildeten, insbesondere zumindest abschnittsweise im Wesentlichen zylindrischen, insbesondere kreiszylindrischen Aufnahmeraum zur Aufnahme des Gleitelements umfasst. Allgemein bevorzugt ist der Schlittenkörper dergestalt ausgeführt, dass er beide der Führungsabschnitte an ihrer jeweiligen Transversalseite zumindest teilweise umgreift, insbesondere ohne unmittelbar an den Führungsabschnitten anzulegen. In den durch den Aufnahmebereich ausgebildeten Aufnahmeraum ist das Gleitelement an dem Schlittenkörper gehalten, insbesondere dergestalt, dass es zwischen dem Schlittenkörper und dem jeweiligen Führungsabschnitt, insbesondere unmittelbar, zur Anlage gelangt. Der Aufnahmeraum ist dergestalt geweitet ausgebildet, dass das Gleitelement im Aufnahmeraum relativ zum Schlittenkörper über den Verstellweg hinweg entlang der Stellrichtung verschieblich ist. Beispielsweise kann dazu die Innenkontur des Aufnahmeraums eine zumindest abschnittsweise kreiszylindrischen Außenkontur des Gleitelements dergestalt nachgebildet sein, dass sie eine zumindest abschnittsweise oval-zylindrische Innenkontur aufweist, wobei ein Erstreckungsradius des Aufnahmeraums im Wesentlichen mit einem Außenradius der Außenkontur des Gleitelements übereinstimmt. Besonders bevorzugt weist der Schlittenkörper einen weiteren Aufnahmebereich auf, der einen zumindest Abschnitten der Außenkontur des weiteren Gleitelements nachgebildeten, insbesondere zumindest abschnittsweise im Wesentlichen zylindrischen, insbesondere kreiszylindrischen, Aufnahmeraum zur Aufnahme des weiteren Gleitelements umfasst, in dem das weitere Gleitelement an dem Schlittenkörper insbesondere unbeweglich gehalten ist. Merkmale, die in Bezug auf den Aufnahmebereich offenbart sind, sind entsprechend, d. h. bezogen auf das weitere Gleitelement, auf den weiteren Führungsabschnitt übertragbar. Durch den Führungsabschnitt ist das Gleitelement in dem Schlittenkörper gehalten, wobei der Schlittenkörper über das Gleitelement mit seinen Führungsabschnitten an der Schiene gehalten ist.

Gemäß einer bevorzugten Ausführungsform ist die Schiene durch eine Durchführung des Schlittenkörpers in Längsrichtung hindurchgeführt. Dadurch ist bevorzugt in jeder Position zumindest ein Abschnitt, insbesondere die Führungsabschnitte, in den Schlittenkörper aufgenommen. Dabei grenzt der jeweilige Aufnahmeraum an die Durchführung an, insbesondere geht er in die Durchführung über. Gemäß der bevorzugten Ausführungsform ist zumindest eines, insbesondere sind beide, der Gleitelemente in der Durchführung aufgenommen unter elastischer Auslenkung an den jeweiligen Aufnahmebereich anlegbar zum Halten an dem jeweiligen Aufnahmebereich. Das heißt insbesondere, dass zum Halten des Gleitelements an dem jeweiligen Aufnahmebereich das Gleitelement zunächst in der Durchführung angeordnet ist, worauf das Gleitelement, insbesondere entlang der Stellrichtung, in den jeweiligen Aufnahmeraum verschiebbar ist unter elastischer Auslenkung von zumindest Abschnitten des jeweiligen Gleitelements. Allgemein ist unter einer elastischen Auslenkung eine Auslenkung gegenüber einer Ruhelage zu verstehen, wobei die Auslenkung durch Wirkung einer externen Kraft unter Ausbildung einer inhärenten Gegenkraft (Federkraft) erzeugt ist. Besonders bevorzugt ist das Gleitelement auslenkungsfrei in dem Aufnahmebereich gehalten.

Besonders bevorzugt ist der Schlittenkörper, insbesondere mit einem Druckgussverfahren aus einem Grundwerkstoff hergestellt. Als Grundwerkstoff kommen eine Vielzahl an Werkstoffen in Frage, die eine besonders gute Festigkeit und/oder Steifigkeit aufweisen. Als Grundwerkstoff hat sich insbesondere eine Zinklegierung bewährt, wobei der Schlittenkörper bevorzugt mit einem Zinkdruckguss-Verfahren hergestellt und besonders bevorzugt durch mechanische, insbesondere spanende, Fertigungsverfahren weiterverarbeitet ist. Bevorzugt ist das Gleitelement und/oder das weitere Gleitelement, insbesondere mit einem Spritzgussverfahren, aus einem Gleitwerkstoff hergestellt, der sich von dem Grundwerkstoff unterscheidet.

Für bestimmte Anwendungen kommen ferner Ausführungsformen in Frage, bei denen Grundwerkstoff und Gleitwerkstoff identisch sind. Als Gleitwerkstoff hat sich insbesondere ein tribologisch optimierter Kunststoff, insbesondere Tribopolymer bewährt, der vorzugsweise im Kunststoffspritzgussverfahren verarbeitbar ist.

Insbesondere zählen zu den hier anwendbaren Tribopolymeren die Thermoplaste Polyethen, Polypropylen, Polyacetal, Polycarbonat, Polyamid, Polyvinylchlorid, Polytetrafluorethen sowie bei den Duroplasten Phenolharze. Zur weiteren Verminderung der Reibung können diese Kunststoffe Schmiermittel, insbesondere feinteilige Feststoffschmiermittel, wie z.B. Molybdändisulfid oder Graphit, enthalten. Solche Polymere werden vorliegend auch als Tribopolymere bezeichnet. Da mit der Reibung auch der Verschleiß und auch der Abrieb geringer wird, sind diese Produkte besonders angebracht, wenn es auf hohe Reinheit ankommt, wie beispielsweise in der Lebensmittel- und Halbleiterindustrie, sowie bei biochemischen und mikrobiologischen Anwendungen. Die polymeren Werkstoffe können ferner Füllstoffe und Faserstoffe, zum Beispiel aus Kunststoff oder Textil, zur Verbesserung der mechanischen Eigenschaften enthalten. Der tribologisch optimierte Kunststoff bzw. Tribopolymer ist bevorzugt aus einem Compound gebildet. Das Compound enthält bevorzugt ein Basispolymer, beispielsweise ein Thermoplast, insbesondere Polyethylen, Polypropylen, Polycarbonat, Polyamid, Polyvinylchlorid oder Polytetrafluorethylen. Das Compound enthält bevorzugt als Feststoffschmiermittel wirkende Partikel, beispielsweise Molybdändisulfid und/oder Graphit. Das Compound enthält bevorzugt einen oder mehrere Füllstoffe, beispielsweise Verstärkungsfasern und/oder Verstärkungspartikel. Vorzugsweise ist die Schiene einteilig ausgebildet. Vorzugsweise ist die Schiene aus einem Metallwerkstoff gefertigt, der insbesondere Aluminium und/oder eine Aluminiumlegierung enthält, und der bevorzugt hartanodiertist, was zu vorteilhaften Gleit- und Abriebeigenschaften in einer Materialpaarung mit Kunststoff führt.

Besonders bevorzugt weist das Gleitelement und/oder das weitere Gleitelement, einen abgesetzten Fixierabschnitt auf, der einen korrespondierenden Fixierabschnitt des Schlittenkörpers hintergreift zur Fixierung des jeweiligen Gleitelements entlang der Längsrichtung . Besonders bevorzugt sind die Fixierabschnitte jeweils in Längsrichtung auf Höhe der Federeinrichtung und/oder auf Höhe der Verstellführung angeordnet. Besonders bevorzugt sind der Fixierabschnitt des Gleitelements und der Fixierabschnitt des zweiten bzw. weiteren Gleitelements auf gleicher Höhe angeordnet. Besonders bevorzugt sind sämtliche der Fixierabschnitte auf Höhe des Mittenbereichs des Schlittenkörpers angeordnet, wodurch der Schlitten besonders einfach gestaltet sein kann.

Gemäß einer bevorzugten Ausführungsform weist der Schlittenkörper eine Zugangsöffnung auf, bevorzugt an einer Seite senkrecht zu Längsrichtung, zum Einsetzen von zumindest Teilen der Federeinrichtung, insbesondere des Federelements, in den Schlittenkörper. Besonders bevorzugt erstreckt sich der Fixierabschnitt des Schlittenkörpers zu beiden Seiten entlang der Längsrichtung über die Zugangsöffnung hinaus. Dadurch können Zugangsöffnungen und Fixierabschnitt besonders platzsparend angeordnet sein, ohne die jeweilige Funktion nachteilig zu beeinflussen.

Allgemein besonders bevorzugt weist der Schlitten zumindest für eines, insbesondere für jeweils beide, der Gleitelemente einen Verdrehsicherungsabschnitt auf, der in Anlage an dem jeweiligen Gleitelement, insbesondere an dessen Fixierabschnitt, eine Verdrehung des Gleitelements relativ zum Schlittenkörper um eine in Längsrichtung verlaufende Drehachse sperrt. Dazu kann der Verdrehsicherungsabschnitt bevorzugt mehrere in unterschiedliche Richtungen weisende und an dem Gleitelement anliegende Planflächen aufweisen, die in Anlage an dem Gleitelement das Verdrehen des Gleitelements relativ zum Schlittenkörper sperren. Durch den Verdrehsicherungsabschnitt ist eine Beibehaltung der bestimmungsgemäßen Lage des Gleitelements in dem Schlittenkörper auch dann gewährleistet, wenn der Schlitten nicht auf der Schiene geführt ist.

Allgemein bevorzugt erstreckt sich jedes Gleitelement durchgehend über zumindest 80 %, insbesondere zumindest 90 % einer maximalen Erstreckung des Schlittenkörpers entlang der Längsrichtung hinweg. Besonders bevorzugt sind sämtliche der Gleitflächen des ersten Gleitlager-Abschnitts durch das Gleitelement ausgebildet, insbesondere über zumindest 90 % der Erstreckung des Gleitelements in Längsrichtung hinweg. Besonders bevorzugt sind sämtliche der Gleitflächen des zweiten Gleitlager-Abschnitts durch das weitere Gleitelement ausgebildet, wobei sich die Gleitflächen des zweiten Gleitlager-Abschnitts bevorzugt über zumindest 90 % der Erstreckung des Gleitelements in Längsrichtung hinweg erstrecken.

Die Erfindung betrifft ferner einen Schlitten für sich genommen, der für eine erfindungsgemäße Gleitlagerführung gestaltet ist. Der Schlitten weist einen Schlittenkörper auf, an dem ein erster Gleitlager-Abschnitt zur Anlage an einem ersten Führungsabschnitt einer Schiene der Gleitlagerführung bzw. Linearführung und ein zweiter Gleitlager-Abschnitt zur Anlage an einem zweiten Führungsabschnitt der Schiene vorgesehen ist. Die Gleitlager-Abschnitte sind ausgebildet, den Schlitten, insbesondere den Schlittenkörper, gleitverschieblich an den Führungsabschnitten relativ zur Schiene in einer Längsrichtung zu führen, wobei jeweils einer der Gleitlager-Abschnitte ausgebildet ist, jeweils einen der Führungsabschnitte zumindest teilweise zu umgreifen. Durch das Umgreifen der an den Führungsabschnitten anliegenden Gleitlager-Abschnitte ist der Schlitten an der Schiene senkrecht zur Längsrichtung gehalten.

Der Schlitten umfasst erfindungsgemäß eine Federeinrichtung, die ausgebildet ist, das Gleitelement relativ zum zweiten Gleitlager-Abschnitt entlang einer Stellrichtung quer zur Längsrichtung transversal seitlich gegen den ersten Führungsabschnitt zu drücken bzw. pressen zum Spielausgleich.

Allgemein kann der Schlitten eines oder mehrere der bevorzugten Merkmale aufweisen die vorgenannt im Zusammenhang mit dem Schlitten offenbart sind.

Die Erfindung betrifft ferner eine Verwendung der erfindungsgemäßen Gleitlagerführung bzw. Linearführung, zur schmierfreien Gleitlagerung eines beweglichen Bauteils in einer Maschine bzw. Anlage.

Hinsichtlich der Funktionsweise kann insbesondere vorgesehen sein, dass die Federeinrichtung das Gleitelement insgesamt und als Ganzes relativ zu dem zweiten Gleitlager-Abschnitt entlang einer Stellrichtung quer zur Längsrichtung bzw. transversal seitlich gegen den ersten Führungsabschnitt drückt. Mittels der passiven Federeinrichtung wird das Gleitelement selbsttätig relativ zum zweiten Gleitlager-Abschnitt in Stellrichtung verschoben zum selbsttätigen Spielausgleich der Linearführung während des Betriebs.

Die Erfindung wird nachfolgend ohne Beschränkung unter Bezugnahme auf zwei Figuren anhand eines bevorzugten Ausführungsbeispiels näher erläutert.

Es zeigen:
- Figur 1:: eine Explosionsansicht einer bevorzugten Ausführungsform der erfindungsgemäßen Linearführung;
- Figur 2A bis 2E:: in Schnitt-Ansichten bzw. Seiten- und Draufsicht einen erfindungsgemäßen Schlitten aus Figur 1.

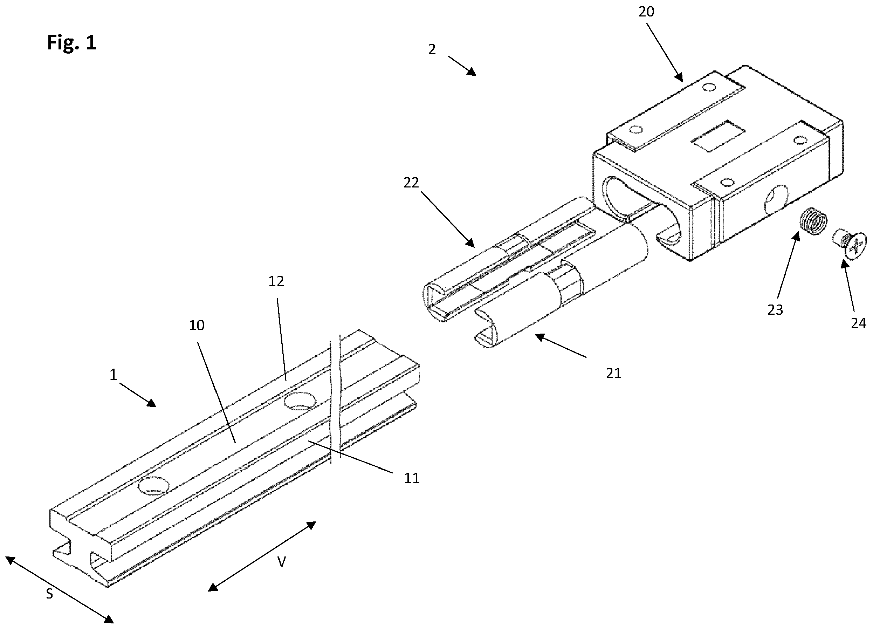

In Figur 1 ist eine Explosionsansicht einer Ausführungsform einer erfindungsgemäßen Linearführung in schematischer Prinzipdarstellung gezeigt. Die Linearführung umfasst eine Schiene 1 und ein Schlitten 2, der ausgebildet ist, in gleitender Anlage relativ zur Schiene 1 geführt zu sein. Die Schiene 1 ist als einteilig ausgebildetes, in einer Längsrichtung V, entlang derer der Schlitten 2 relativ zur Schiene 1 verschoben wird, langgestrecktes Profil ausgebildet. Die Schiene 1 ist dabei aus einer hartanodierten Aluminiumlegierung gefertigt. Die Schiene 1 umfasst einen Schienenkörper 10, an dessen beiden Transversalseiten sich jeweils ein integral mit dem Schienenkörper 10 ausgebildeter Führungsabschnitt 11, 12 erstreckt. In den Schienenkörper 10 sind mehrere um einen gleichen Abstand beabstandete Durchgangsbohrungen vorgesehen, die entlang der Längsrichtung V um einen gleichen Abstand beabstandet sind. Die Durchgangsbohrungen dienen zur Befestigung der Schiene 1 mittels geeigneter Befestigungsmittel. Die Schiene 1 ist unterbrochen dargestellt, wobei sie sich entlang ihrer gesamten Erstreckung entlang der Längsrichtung geradlinig erstreckt. Jeder der Führungsabschnitt der 11, 12 weist mehrere Führungsflächen auf, wobei sämtliche Führungsflächen eines der Führungsabschnitte 11, 12 in jeweils unterschiedliche Raumrichtungen weisen. Zwei der Führungsflächen jedes der Führungsabschnitte 11, 12 verlaufen in entgegengesetzte Richtung weisend im Wesentlichen parallel, wobei eine dazwischenliegende der Führungsflächen jedes der Führungsabschnitt 11, 12 senkrecht dazu verläuft. Dadurch weist die Schiene 1 einen im Wesentlichen T-förmigen Querschnitt über seine gesamte Erstreckung entlang der Längsrichtung V hinweg auf.

Der Schlitten 2 umfasst einen Schlittenkörper 20, der im Wesentlichen quaderförmig ausgebildet ist und zwei vorstehende Befestigungsabschnitte aufweist, an denen jeweils zwei Gewindebohrungen angebracht sind, die ausgebildet sind mittels geeigneter Befestigungsmittel mit einem Körper verbunden zu werden. An dem Schlittenkörper 20 sind ein erster Gleitlager-Abschnitt und ein zweiter Gleitlager-Abschnitt vorgesehen, mittels derer der Schlitten 2 gleitverschieblich an den Führungsabschnitt 11, 12 relativ zur Schiene 1 in Längsrichtung geführt werden kann. Dabei weist der erste Gleitlager-Abschnitt ein separat zum Schlittenkörper 20 ausgebildetes Gleitelement 21 auf und der zweite Gleitlager-Abschnitt ein zum Schlittenkörper 20 separat ausgebildetes weiteres Gleitelement 22. Die Gleitelemente 21, 22 sind vorzugsweise einteilige, baugleiche Spritgussteile aus einem Tribopolymer.

Die Führungsabschnitte umgreifen jeweils mit ihren Gleitelementen 21, 22 jeweils einen der Führungsabschnitte 11, 12 an der jeweiligen Transversalseite zumindest teilweise wenn die in Explosionsansicht gezeigten Komponenten der Linearführung zusammengefügt sind. Durch das Umgreifen wird der Schlitten 2 an der Schiene 1 senkrecht zur Längsrichtung V gehalten, während ein gleitendes Verschieben des Schlittens 2 relativ zur Schiene 1 entlang der Längsrichtung ermöglicht ist. Der Schlitten umfasst ferner eine Federeinrichtung, die ein Federelement 23, hier z.B. eine Schraubendruckfeder, umfasst. Das Federelement 23 ist bestimmungsgemäß im Schlittenkörper 20 aufgenommen und wirkt, insbesondere federelastisch ausgelenkt, zwischen dem Gleitelement 21 und dem Schlittenkörper 20. Mittels des Federelements 23 drückt bzw. presst die Federeinrichtung das Gleitelement 21 entlang einer Stellrichtung S gegen den ersten Führungsabschnitt 11 und dadurch den zweiten Führungsabschnitt 12 gegen das weitere Gleitelement 22 des zweiten Gleitlager-Abschnitts. Dadurch wird ein Spielausgleich der Linearführung entlang der Stellrichtung erzeugt, ohne die Gleiteigenschaften der senkrecht dazu wirkenden Komponenten der Linearführung zu beeinflussen.

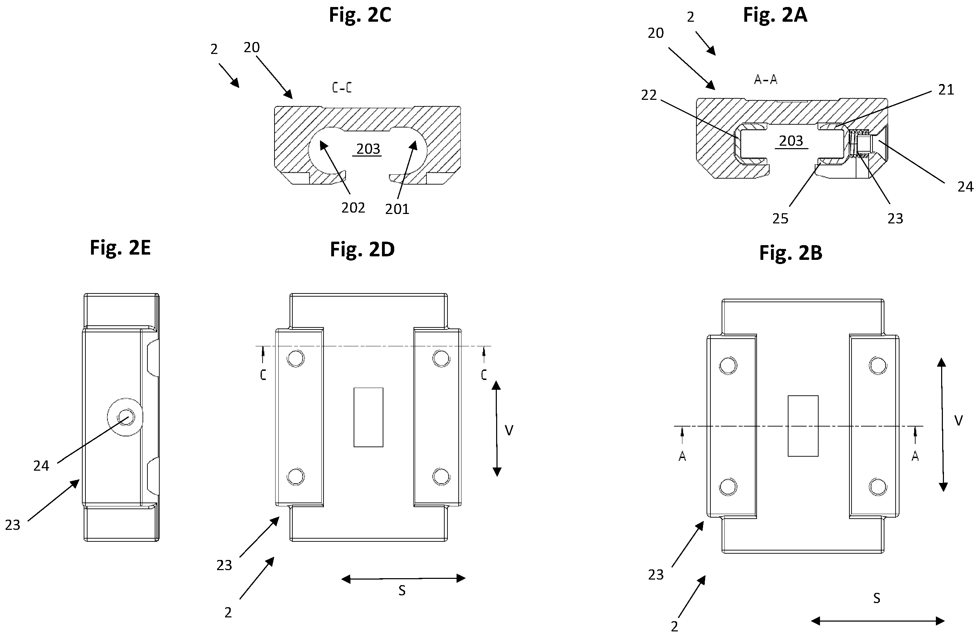

Figuren 2A bis 2E zeigen jeweils in schematischer Prinzipdarstellungen den Schlitten 2 der beispielhaften Ausführungsform der Linearführung aus Figur 1 in Draufsicht, in Seitenansicht und in zwei Schnittansichten. Die Schnittansichten in den Figuren 2A und 2C beziehen sich auf zwei unterschiedlich positionierte Schnitte des Schlittens 2 senkrecht zur Längsrichtung V in den Figuren 2B und 2D, wobei die Schnitte entlang der Längsrichtung V voneinander beabstandet sind. Der Schlittenkörper 20 weist eine Durchführung 203 auf, durch die die Schiene 1 mit ihren Führungsabschnitten 11, 12 bestimmungsgemäß hindurchgeführt ist. An die Durchführung 203 angrenzend weist der Schlittenkörper 20 zu beiden Seiten entlang der Stellrichtung einen Aufnahmebereich 201, 202 auf, der jeweils einen Aufnahmeraum zur Aufnahme des Gleitelements 21 bzw. des weiteren Gleitelements 22 ausbildet. Die Gleitelemente 21, 22 sind mittels des Aufnahmebereichs 201, 202 an den Schlittenkörper 20 gehalten. Der Schlitten 1 weist ferner eine als Aussparung integral mit dem Schlittenkörper 20 ausgebildete Verstellführung 25 auf, entlang derer das Gleitelement 21 relativ zum Schlittenkörper 20 über einen Verstellweg hinweg gleitend verschoben werden kann. Somit sind der Aufnahmeraum des Aufnahmebereichs 201 und der Aufnahmeraum des weiteren Aufnahmebereich 202 dergestalt unterschiedlich ausgebildet, dass das weitere Gleitelement 22 an dem Schlittenkörper 20 unbeweglich gehalten ist, wobei das Gleitelement 21 in dem Schlittenkörper 20 entlang der Stellrichtung S über eine Wegstrecke verschiebbar gehalten ist. Das Federelement 23 der Federeinrichtung im Schlittenkörper 20 presst in Stellrichtung S gegen das Gleitelement 21 und das Gleitelement 21 gegen den ersten Führungsabschnitt 11 zum Spielausgleich der Linearführung. Der Verstellweg des Gleitelements 21 ist durch Anschläge begrenzt, die durch eine Querschnittsverringerung des Aufnahmeraums entlang der Stellrichtung des Aufnahmebereichs 201 realisiert ist.

Beide Gleitelemente 21, 22 sind im Wesentlichen gleichartig ausgebildet, wobei jedes der Gleitelemente 21, 22 eine abschnittsweise im Wesentlichen kreiszylindrische Außenkontur aufweist, die im Mittenbereich jeweils durch einen Fixierabschnitt unterbrochen ist, der gegenüber der umliegenden Außenkontur abgesetzt ist und ausgebildet ist, einen korrespondierenden Fixierabschnitt des Schlittenkörpers 20 zu hintergreifen zur Fixierung des jeweiligen Gleitelements 21, 22 entlang der Längsrichtung V. In die Mittenbereich sind an der Außenkontur des jeweiligen Gleitelements 21, 22 ferner mehrere Planflächen ausgebildet, die in dem Schlittenkörper 20 an korrespondierenden Flächen anliegen, wodurch ein Verdrehen des jeweiligen Gleitelements 21, 22 relativ zum Schlittenkörper 20 um eine in Längsrichtung V verlaufenen Drehachse gesperrt ist. Die Planflächen bilden demnach gemeinsam ein Verdrehsicherungsabschnitt des jeweiligen Gleitelements 21, 22. Allgemein vorteilhaft erstrecken sich die Gleitelemente 21, 22 jeweils entlang der Längsrichtung V über nahezu die gesamte Erstreckung des Schlittenkörpers 20 entlang der Längsrichtung V.

Entsprechend sind in der Schnittansicht C die Gleitelemente 21, 22 zur verbesserten Darstellung der im Wesentlichen zylindrischen Innenkontur des jeweiligen Aufnahmeraums der Aufnahmebereiche 201, 202, ausgeblendet.

Weitere nennenswerte Vorteile der Erfindung sind:
- schmierfreier Lauf (ohne Schmiermittel);
- stufenloses, sanftes Gleiten des Schlittens;
- guter Halt des Schlittens (Positionsfestigkeit);
- leiser und klapperfreier Lauf;
- einfache Bauweise der Spieleinstellung; und
- kompakte Bauform von Schiene und Schlitten.

### Bezugszeichenliste

- 1: Schiene
- 2: Schlitten
- 10: Schienenkörper
- 11: erster Führungsabschnitt
- 12: zweiter Führungsabschnitt
- 20: Schlittenkörper
- 21: Gleitelement
- 22: weiteres Gleitelement
- 23: Federelement
- 24: Fixierelement
- 25: Verstellführung
- 201: Aufnahmebereich
- 202: weiterer Aufnahmebereich
- 203: Durchführung
- S: Stellrichtung
- V: Längsrichtung

## Patentansprüche

1. Gleitlagerführung, insbesondere Linearführung, umfassend eine Schiene (1), die einen in einer Längsrichtung (V) langgestreckten Schienenkörper (10) aufweist, an dessen beiden Transversalseiten jeweils ein sich entlang der Längsrichtung (V) erstreckender Führungsabschnitt (11, 12) ausgebildet ist, und einen Schlitten (2), der einen Schlittenkörper (20) aufweist, an dem ein erster an einem ersten der Führungsabschnitte (11) und ein zweiter an einem zweiten der Führungsabschnitte (12) anliegender Gleitlager-Abschnitt vorgesehen sind, mittels derer der Schlitten (2) gleitverschieblich an den Führungsabschnitten relativ zur Schiene (1) in Längsrichtung (V) geführt ist, wobei jeweils einer der Gleitlager-Abschnitte jeweils einen der Führungsabschnitte (11, 12) an der jeweiligen Transversalseite zumindest teilweise umgreift zum Halten des Schlittens (2) an der Schiene (1) senkrecht zur Längsrichtung (V), wobei zumindest der erste Gleitlager-Abschnitt ein Gleitelement (21) umfasst,
**dadurch gekennzeichnet, dass**
das Gleitelement (21) des ersten Gleitlager-Abschnitts den entsprechenden Führungsabschnitt (11, 12) an der jeweiligen Transversalseite zumindest teilweise umgreift, und
der Schlitten (2) eine Federeinrichtung zum Spielausgleich umfasst, die das umgreifende Gleitelement (21) relativ zum zweiten Gleitlager-Abschnitt entlang einer Stellrichtung (S) quer zur Längsrichtung (V) gegen den ersten Führungsabschnitt (11) drückt, wobei das federbelastete Gleitelement (21) in Stellrichtung (S) gegen den ersten Führungsabschnitt (11) der Schiene (1) gepresst ist und den ersten Führungsabschnitt (11) in einer senkrecht zur Stellrichtung verlaufenden Richtung beidseitig hintergreift, wobei das federbelastete Gleitelement (21) aus einem Kunststoff mit tribologischen Zusätzen hergestellt ist.

2. Gleitlagerführung nach Anspruch 1, **dadurch gekennzeichnet, dass** die Federeinrichtung zumindest ein, insbesondere entlang der Stellrichtung (S), federelastisch wirkendes Federelement (23) umfasst oder hieraus besteht, wobei der Schlitten vorzugsweise ein Fixierelement (24) umfasst, das das Federelement (23) zumindest in einer Richtung senkrecht zur Stellrichtung (S) an dem Schlittenkörper (20) fixiert.

3. Gleitlagerführung nach Anspruch 1 oder 2, **dadurch gekennzeichnet, dass**
der Schlitten (2) eine Verstellführung (25) umfasst, die das Gleitelement (21) relativ zum Schlittenkörper (20) über einen Verstellweg entlang der Stellrichtung (S) verschieblich führt, wobei die Verstellführung (25) vorzugsweise zumindest einen Anschlag aufweist, der den Verstellweg begrenzt und/oder vorzugsweise durch eine Aussparung im Schlittenkörper (20) gebildet ist.

4. Gleitlagerführung nach Anspruch 1, 2 oder 3, insbesondere nach Anspruch 3, **dadurch gekennzeichnet, dass**
die Federeinrichtung, insbesondere das Federelement, unmittelbar an das Gleitelement (21) angreift, insbesondere bezogen auf die Längsrichtung (V) auf Höhe der Verstellführung (24) und/oder in einem Mittenbereich des Schlittens (2).

5. Gleitlagerführung nach einem der vorangehenden Ansprüche, **dadurch gekennzeichnet, dass**
der zweite Gleitlager-Abschnitt ein weiteres Gleitelement (22) umfasst, und/oder
das mindestens eine Gleitelement (21) bzw. beide Gleitelemente (21, 22) jeweils zumindest drei Gleitflächen aufweisen, wobei jeweils zumindest zwei der Gleitflächen eines der Gleitlager-Abschnitte an jeweils unterschiedlichen Seiten eines der Führungsabschnitte (11, 12) gleitend anliegen und/oder im Wesentlichen senkrecht zueinander liegen.

6. Gleitlagerführung nach Anspruch 5, **dadurch gekennzeichnet, dass** die Gleitelemente (21, 22) gleichartig, insbesondere baugleich und einstückig, ausgebildet sind,
wobei die Gleitelemente (21, 22) vorzugsweise
- drei im Wesentlichen senkrecht zueinander liegende innere Gleitflächen aufweisen, und/oder
- jeweils eine Außenkontur aufweisen, die zumindest abschnittsweise im Wesentlichen zylindrisch, insbesondere kreiszylindrisch, ausgebildet ist.

7. Gleitlagerführung nach einem der vorangehenden Ansprüche, **dadurch gekennzeichnet, dass**
der Schlittenkörper (20) für jedes Gleitelement (21, 22) im entsprechenden Gleitlager-Abschnitt einen Aufnahmebereich (201) bildet, der einen zur Außenkontur des Gleitelements (21) im Wesentlichen konjugierten Aufnahmeraum zur Aufnahme des jeweiligen Gleitelements (21, 22) umfasst, wobei der Aufnahmeraum insbesondere zumindest abschnittsweise im Wesentlichen zylindrisch, insbesondere kreiszylindrisch, ausgeführt ist, wobei der Aufnahmeraum des mit der Federeinrichtung zusammenwirkenden Gleitelements (21) zur Bildung einer Verstellführung (25) quer zur Längsrichtung geweitet ausgebildet ist.

8. Gleitlagerführung nach Anspruch 7, **dadurch gekennzeichnet, dass** das mindestens eine bzw. die Gleitelemente (21, 22) unter elastischer Auslenkung an den jeweiligen Aufnahmebereich anlegbar sind.

9. Gleitlagerführung nach einem der vorangehenden Ansprüche, **dadurch gekennzeichnet, dass**
der Schlittenkörper (20), insbesondere mit einem Druckgussverfahren, aus einem metallischen Grundwerkstoff hergestellt ist, wobei das bzw. die Gleitelemente (21, 22), insbesondere mit einem Spritzgussverfahren, aus einem von dem Grundwerkstoff unterschiedlichen Gleitwerkstoff, insbesondere einem Tribopolymer, hergestellt ist.

10. Gleitlagerführung nach einem der vorangehenden Ansprüche, **dadurch gekennzeichnet, dass**
das Gleitelement (21) und/oder das weitere Gleitelement (22), einen abgesetzten Fixierabschnitt aufweist, der mit einem korrespondierenden Fixierabschnitt des Schlittenkörpers (20) in Eingriff steht zur Fixierung des jeweiligen Gleitelements (21, 22) entlang der Längsrichtung (V).

11. Gleitlagerführung nach Anspruch 10, **dadurch gekennzeichnet, dass**
der Fixierabschnitt bzw. die Fixierabschnitte in Längsrichtung (V) auf Höhe der Federeinrichtung und/oder auf Höhe der Verstellführung (25) angeordnet sind, und/oder
der Schlittenkörper (20) eine Zugangsöffnung umfasst zum Einsetzen der Federeinrichtung, insbesondere des Federelements (23), in den Schlittenkörper (20).

12. Gleitlagerführung nach einem der vorangehenden Ansprüche, insbesondere nach Anspruch 10 oder 11, **dadurch gekennzeichnet, dass**
der Schlitten (2) für jedes Gleitelement (21, 22) einen Verdrehsicherungsabschnitt aufweist, der in Anlage an dem Gleitelement (21, 22), insbesondere an dessen Fixierabschnitt, ein Verdrehen des Gleitelements (21, 22) um eine in Längsrichtung (V) verlaufende Drehachse sperrt.

13. Gleitlagerführung nach einem der vorangehenden Ansprüche, **dadurch gekennzeichnet, dass**
das Gleitelement (21) und/oder das weitere Gleitelement (22) sich durchgehend über zumindest 80%, einer Erstreckung des Schlittenkörpers (20) in Längsrichtung (V) erstreckt.

14. Schlitten (2) für eine Gleitlagerführung, insbesondere Linearführung, nach einem der Ansprüche 1 bis 13, aufweisend einen Schlittenkörper (20), an dem ein erster Gleitlager-Abschnitt zur Anlage an einem ersten Führungsabschnitt (11) einer Schiene (1) der Linearführung und ein zweiter Gleitlager-Abschnitt zur Anlage an einem zweiten Führungsabschnitt (12) der Schiene (1) vorgesehen sind, wobei die Gleitlager-Abschnitte ausgebildet sind, den Schlitten (2) gleitverschieblich an den Führungsabschnitten (11,1 2) relativ zur Schiene (1) in einer Längsrichtung (V) zu führen, wobei jeweils einer der Gleitlager-Abschnitte ausgebildet ist, jeweils einen der Führungsabschnitte (11, 12) zumindest teilweise zu umgreifen zum Halten des Schlittens (2) an der Schiene (1) senkrecht zur Längsrichtung (V), wobei zumindest der erste Gleitlager-Abschnitt ein Gleitelement (21) umfasst,
**dadurch gekennzeichnet, dass**
der Schlitten (2) eine Federeinrichtung zum Spielausgleich umfasst, die ausgebildet ist, ein umgreifendes Gleitelement (21) insgesamt relativ zum zweiten Gleitlager-Abschnitt entlang einer Stellrichtung (S) quer zur Längsrichtung (V) gegen den ersten Führungsabschnitt (11) zu drücken,
wobei das federbelastete Gleitelement (21) in einer Stellrichtung (S) gegen den ersten Führungsabschnitt (11) der Schiene (1) gepresst ist und den ersten Führungsabschnitt (11) in einer senkrecht zur Stellrichtung verlaufenden Richtung beidseitig hintergreift,
wobei das federbelastete Gleitelement (21) aus einem Kunststoff mit tribologischen Zusätzen hergestellt ist.

15. Schlitten nach Anspruch 14, **gekennzeichnet durch** mindestens eines der weiterbildenden Merkmale des Schlittens nach einem der Ansprüche 2 bis 13.

16. Verwendung einer Gleitlagerführung nach einem der Ansprüche 1 bis 13 zur schmierfreien Gleitlagerung eines beweglichen Bauteils in einer Maschine bzw. Anlage.

## Claims

1. Slide bearing guide device, in particular linear guide device, comprising a rail (1) which has a rail body (10) which is elongated in a longitudinal direction (V) and on the two transverse sides of which a respective guide portion (11, 12) extending along the longitudinal direction (V) is formed, and a carriage (2) which has a carriage body (20) on which a first slide bearing portion abutting against a first of the guide portions (11) and a second slide bearing portion abutting against a second of the guide portions (12) are provided, by means of which the carriage (2) is slidably guided on the guide portions relative to the rail (1) in the longitudinal direction (V), wherein a respective one of the slide bearing portions at least partially engages around one of the guide portions (11, 12) on the respective transverse side for holding the carriage (2) on the rail (1) perpendicularly to the longitudinal direction (V), wherein at least the first slide bearing portion comprises a sliding element (21),
**characterized in that**
the sliding element (21) of the first slide bearing portion at least partially engages around the corresponding guide portion (11, 12) on the respective transverse side, and
the carriage (2) comprises a spring device for play compensation, which presses the surrounding sliding element (21) against the first guide portion (11) relative to the second slide bearing portion along an adjusting direction (S) transverse to the longitudinal direction (V), wherein the spring loaded sliding element (21) is pressed against the first guide portion (11) of the rail (1) in the actuating direction (S) and engages behind the first guide portion (11) at both sides in a direction perpendicular to the actuating direction, wherein the spring-loaded sliding element (21) is made of a plastic having tribological additives.

2. Slide bearing guide device according to claim 1, **characterized in that**
the spring device comprises or consists of at least one spring element (23) resiliently acting in particular along the adjusting direction (S), the carriage preferably comprising a fixing element (24) which fixes the spring element (23) to the carriage body (20) at least in a direction perpendicular to the adjusting direction (S).

3. Slide bearing guide device according to claim 1 or 2, **characterized in that**
the slide (2) comprises an adjustment guide device (25) which displaceably guides the sliding element (21) relative to the carriage body (20) over an adjustment path along the adjustment direction (S), the adjustment guide device (25) preferably having at least one stop which limits the adjustment path and/or preferably being formed by a recess in the carriage body (20).

4. Slide bearing guide device according to claim 1, 2 or 3, in particular according to claim 3, **characterized in that** the spring device, in particular the spring element, engages directly at the sliding element (21), in particular relative to the longitudinal direction (V) at the level of the adjustment guide device (24) and/or in a central region of the carriage (2).

5. Slide bearing guide device according to one of the preceding claims, **characterized in that**
the second slide bearing portion comprises a further sliding element (22) and/or
the at least one sliding element (21) or both sliding elements (21, 22) each have at least three sliding surfaces, at least two of the sliding surfaces of one of the slide bearing portions in each case slidingly abutting against respectively different sides of one of the guide portions (11, 12) and/or being essentially perpendicular to one another.

6. Slide bearing guide device according to claim 5, **characterized in that**
the sliding elements (21, 22) are of the same type, in particular of identical design and in one piece,
wherein the sliding elements (21, 22) preferably have
- three inner sliding surfaces substantially perpendicular to one another and/or
- each have an outer contour which is substantially cylindrical, in particular circular-cylindrical, at least in sections.

7. Slide bearing guide device according to one of the preceding claims, **characterized in that**
the carriage body (20) forms a receiving region (201) for each sliding element (21, 22) in the corresponding slide bearing portion, which receiving region comprises a receiving space substantially conjugate to the outer contour of the sliding element (21) for receiving the respective sliding element (21, 22), wherein the receiving space is designed in particular substantially cylindrically, in particular circular-cylindrically, at least in sections, wherein the receiving space of the sliding element (21) cooperating with the spring device is designed widened transversely to the longitudinal direction, for forming an adjustment guide device (25).

8. Slide bearing guide device according to claim 7, **characterized in that**
the at least one sliding element or the sliding elements (21, 22) can be applied against the respective receiving region under elastic deflection.

9. Slide bearing guide device according to one of the preceding claims, **characterized in that**
the carriage body (20) is made from a metallic base material, in particular by a die-casting process, wherein the sliding element(s) (21, 22) is(are) made from a sliding material different from the base material, in particular a tribopolymer, in particular by an injection molding process.

10. Slide bearing guide device according to one of the preceding claims, **characterized in that**
the sliding element (21) and/or the further sliding element (22) has or have an offset fixing portion which engages with a corresponding fixing portion of the carriage body (20) for fixing the respective sliding element (21, 22) along the longitudinal direction (V).

11. Slide bearing guide device according to claim 10, **characterized in that**
the fixing portion or portions is or are arranged in the longitudinal direction (V) at the level of the spring device and/or at the level of the adjustment guide device (25) and/or
the carriage body (20) comprises an access opening for inserting the spring device, in particular the spring element (23), into the carriage body (20).

12. Slide bearing guide device according to one of the preceding claims, in particular according to claim 10 or 11, **characterized in that**
the carriage (2) has, for each sliding element (21, 22), an anti-rotation portion which, when in contact with the sliding element (21, 22), in particular with its fixing portion, prevents the sliding element (21, 22) from rotating about an axis of rotation extending in the longitudinal direction (V).

13. Slide bearing guide device according to one of the preceding claims, **characterized in that**
the sliding element (21) and/or the further sliding element (22) extends or extend continuously over at least 80% of an extension of the carriage body (20) in the longitudinal direction (V).

14. Carriage (2) for a slide bearing guide device, in particular a linear guide device, according to one of claims 1 to 13, comprising a carriage body (20) on which a first slide bearing portion is provided for abutment against a first guide portion (11) of a rail (1) of the linear guide device and a second slide bearing portion is provided for abutment against a second guide portion (12) of the rail (1), wherein the slide bearing portions are designed for guiding the carriage (2) slidably on the guide portions (11, 12) relative to the rail (1) in a longitudinal direction (V), wherein one of the slide bearing portions is respectively designed to engage at least partially around one of the guide portions (11, 12), respectively for holding the carriage (2) on the rail (1) perpendicular to the longitudinal direction (V), wherein at least the first slide bearing portion comprises a sliding element (21), **characterized in that**
the carriage (2) comprises a spring device for compensation of play, which spring device is designed to press a surrounding sliding element (21) as a whole against the first guide portion (11) relative to the second slide bearing portion along an adjusting direction (S) transverse to the longitudinal direction (V)) , wherein the spring loaded sliding element (21) is pressed against the first guide portion (11) of the rail (1) in the actuating direction (S) and engages behind the first guide portion (11) at both sides in a direction perpendicular to the actuating direction, wherein the spring-loaded sliding element (21) is made of a plastic having tribological additives.

15. Carriage according to claim 14, **characterized by** at least one of the features further improving the carriage according to any one of claims 2 to 13.

16. Use of a slide bearing guide device according to any one of claims 1 to 13 for lubrication-free sliding support of a movable component in a machine or system.

## Revendications

1. Guide de palier lisse, en particulier guide linéaire, comprenant un rail (1) qui présente un corps de rail (10) allongé dans une direction longitudinale (V), sur les deux côtés transversaux duquel est formée respectivement une section de guidage (11, 12) s'étendant le long de la direction longitudinale (V), et un chariot (2) qui présente un corps de chariot (20) sur lequel sont prévues une première partie de palier lisse s'appuyant sur une première des sections de guidage (11) et une deuxième partie de palier lisse s'appuyant sur une deuxième des sections de guidage (12), au moyen desquelles le chariot (2) est guidé de manière à pouvoir coulisser sur les sections de guidage par rapport au rail (1) dans la direction longitudinale (V), l'une des parties de palier lisse entourant au moins partiellement l'une des sections de guidage (11, 12) sur le côté transversal correspondant afin de maintenir le chariot (2) sur le rail (1) perpendiculairement à la direction longitudinale (V), au moins la première partie de palier lisse comprenant un élément coulissant (21),
**caractérisé en ce que**
l'élément coulissant (21) de la première partie de palier lisse entoure au moins partiellement la section de guidage correspondante (11, 12) sur le côté transversal correspondant, et le chariot (2) comprend un dispositif à ressort pour compenser le jeu, qui presse l'élément coulissant (21) qui entoure la première partie de palier lisse (11) contre la première section de guidage (11) le long d'une direction de réglage (S) transversalement à la direction longitudinale (V), l'élément coulissant (21) sollicité par ressort étant pressé dans la direction de réglage (S) contre la première section de guidage (11) du rail (1) et s'engageant derrière la première section de guidage (11) des deux côtés dans une direction perpendiculaire à la direction de réglage, l'élément coulissant (21) sollicité par ressort étant fabriqué dans une matière plastique avec des additifs tribologiques.

2. Guide de palier lisse selon la revendication 1, **caractérisé en ce que** le dispositif à ressort comprend au moins un élément de ressort (23) agissant de manière élastique, en particulier le long de la direction de réglage (S), ou est constitué de celui-ci, le chariot comprenant de préférence un élément de fixation (24) qui fixe l'élément de ressort (23) au corps de chariot (20) au moins dans une direction perpendiculaire à la direction de réglage (S).

3. Guide de palier lisse selon la revendication 1 ou 2, **caractérisé en ce que**
le chariot (2) comprend un guide de réglage (25) qui guide l'élément coulissant (21) par rapport au corps du chariot (20) sur une course de réglage le long de la direction de réglage (S), le guide de réglage (25) présentant de préférence au moins une butée qui limite la course de réglage et/ou est formée de préférence par un évidement dans le corps de chariot (20).

4. Guide de palier lisse selon les revendications 1, 2 ou 3, en particulier selon la revendication 3, **caractérisé en ce que**
le dispositif à ressort, en particulier l'élément de ressort, agit directement sur l'élément coulissant (21), en particulier par rapport à la direction longitudinale (V) au niveau du guide de réglage (24) et/ou dans une zone centrale du chariot (2).

5. Guide de palier lisse selon l'une quelconque des revendications précédentes,
**caractérisé en ce que**
la deuxième partie de palier lisse comprend un autre élément coulissant (22), et/ou
le ou les éléments coulissants (21, 22) présentent chacun au moins trois surfaces coulissantes, au moins deux des surfaces coulissantes de l'une des parties de palier lisse étant en appui coulissant sur des côtés différents de l'une des sections de guidage (11, 12) et/ou étant essentiellement perpendiculaires entre elles.

6. Guide de palier lisse selon la revendication 5, **caractérisé en ce que** les éléments coulissants (21, 22) sont de même type, en particulier de construction identique et d'un seul tenant,
les éléments coulissants (21, 22) présentant de préférence
- trois surfaces de glissement intérieures sensiblement perpendiculaires entre elles, et/ou
- présentent chacune un contour extérieur qui est au moins en partie sensiblement cylindrique, en particulier cylindrique circulaire.

7. Guide à palier lisse selon l'une quelconque des revendications précédentes,
**caractérisé en ce que**
le corps de chariot (20) forme pour chaque élément coulissant (21, 22) dans la partie de palier lisse correspondante une zone de réception (201) qui comprend un espace de réception essentiellement conjugué au contour extérieur de l'élément coulissant (21) pour recevoir l'élément coulissant respectif (21, 22), l'espace de réception étant notamment réalisé au moins par sections essentiellement cylindrique, en particulier cylindrique circulaire, l'espace de réception de l'élément coulissant (21) coopérant avec le dispositif à ressort étant élargi transversalement à la direction longitudinale pour former un guide de réglage (25).

8. Guide de palier lisse selon la revendication 7, **caractérisé en ce que** le ou les éléments coulissants (21, 22) peuvent être appliqués contre la zone de réception correspondante avec une déviation élastique.

9. Guide de palier lisse selon l'une quelconque des revendications précédentes, **caractérisé en ce que** le corps de chariot (20) est fabriqué à partir d'un matériau de base métallique, en particulier par un procédé de moulage sous pression, le ou les éléments coulissants (21, 22) étant fabriqués, en particulier par un procédé de moulage par injection, à partir d'un matériau coulissant différent du matériau de base, en particulier un tribopolymère.

10. Guide de palier lisse selon l'une quelconque des revendications précédentes,
**caractérisé en ce que**
l'élément coulissant (21) et/ou l'autre élément coulissant (22) présente une partie de fixation décalée qui s'engage avec une partie de fixation correspondante du corps de chariot (20) pour fixer l'élément coulissant respectif (21, 22) dans la direction longitudinale (V).

11. Guide de palier lisse selon la revendication 10,
**caractérisé en ce que**
la ou les parties de fixation sont disposées dans la direction longitudinale (V) au niveau du dispositif à ressort et/ou au niveau du guide de réglage (25), et/ou le corps de chariot (20) comprend une ouverture d'accès pour l'insertion du dispositif à ressort, en particulier de l'élément de ressort (23), dans le corps de chariot (20).

12. Guide de palier lisse selon l'une quelconque des revendications précédentes, en particulier selon la revendication 10 ou 11, **caractérisé en ce que** le chariot (2) comporte, pour chaque élément coulissant (21, 22), une partie anti-rotation qui, en appui contre l'élément coulissant (21, 22), en particulier contre sa partie de fixation, empêche une rotation de l'élément coulissant (21, 22) autour d'un axe de rotation s'étendant dans le sens longitudinal (V).

13. Guide de palier lisse selon l'une quelconque des revendications précédentes, **caractérisé en ce que** l'élément coulissant (21) et/ou l'autre élément coulissant (22) s'étendent de manière continue sur au moins 80 % d'une extension du corps de chariot (20) dans la direction longitudinale (V).

14. Chariot (2) pour un guidage à palier lisse, en particulier un guidage linéaire, selon l'une quelconque des revendications 1 à 13, comportant un corps de chariot (20) sur lequel sont prévus une première partie de palier lisse destinée à venir en appui contre une première section de guidage (11) d'un rail (1) du guidage linéaire et une deuxième partie de palier lisse destinée à venir en appui contre une deuxième section de guidage (12) du rail (1), les parties de palier lisse étant conçues pour guider le chariot (2) de manière coulissante sur les sections de guidage (11, 12) par rapport au rail (1) dans une direction longitudinale (V), l'une des parties de palier lisse étant conçue pour entourer au moins partiellement l'une des sections de guidage (11, 12) au moins en partie pour maintenir le chariot (2) sur le rail (1) perpendiculairement à la direction longitudinale (V), au moins la première partie de palier lisse comprenant un élément de glissement (21),
**caractérisé en ce que**
le chariot (2) comprend un dispositif à ressort pour compenser le jeu, qui est conçu pour presser un élément coulissant (21) qui l'entoure dans son ensemble contre la première section de guidage (11) le long d'une direction de réglage (S) transversalement à la direction longitudinale (V) par rapport à la deuxième partie de palier lisse, l'élément coulissant (21) sollicité par ressort étant pressé dans une direction de réglage (S) contre la première section de guidage (11) du rail (1) et s'engageant derrière la première section de guidage (11) des deux côtés dans une direction perpendiculaire à la direction de réglage, l'élément coulissant (21) sollicité par ressort étant fabriqué dans une matière plastique avec des additifs tribologiques.

15. Chariot selon la revendication 14, **caractérisé par** au moins l'une des caractéristiques de perfectionnement du chariot selon l'une des revendications 2 à 13.

16. Utilisation d'un guide de palier lisse selon l'une quelconque des revendications 1 à 13 pour le support coulissant sans lubrification d'un composant mobile dans une machine ou une installation.
